# EUROPÄISCHE PATENTSCHRIFT

(11) **EP 0 566 977 B1**
(45) Veröffentlichungstag und Bekanntmachung des Hinweises auf die Patenterteilung: **20.09.1995**
(21) Anmeldenummer: 93106075.0
(22) Anmeldetag: 14.04.1993
(51) Int. Cl.: A01J 5/08, A01J 7/00

(54) **Abschlussventil für eine Saugleitung**
Cut-off valve for a suction line
Soupape de fermeture pour un conduite d'aspiration

(30) Priorität: 18.04.1992 DE 4212911
(43) Veröffentlichungstag der Anmeldung: 27.10.1993
(73) Patentinhaber: Happel, Fritz, D-87650 Baisweil (DE)
(72) Erfinder: Happel, Fritz, W-8951 Baisweil (DE); Happel, Werner, W-8951 Friesenried (DE)
(74) Vertreter: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)

(56) Entgegenhaltungen:
- EP-A- 0 088 580
- EP-A- 0 101 589
- GB-A- 737 834
- GB-A- 2 064 823

## Beschreibung

Die Erfindung betrifft ein Abschlußventil in einer Saugleitung, und zwar ein Abschlußventil, das insbesondere am unteren Ende eines Melkbechers angeordnet ist und bei starkem Vakuumverlust im Raum vor dem Abschlußventil entweder ein automatisches Schließen der Saugleitung bewirkt oder manuell betätigt werden kann.

Aus EP 0 101 589 ist eine Ventilanordnung für einen Melkbecher bekannt, die bei Druckabfall einen Abschluß bewirkt, und es ist ferner aus EP 0 088 580 bekannt, einen Vakuumabschluß durch eine große Lageveränderung des Melkbechers zu erreichen.

Diese bekannten Konstruktionen haben vor allem den wesentlichen Nachteil einer umständlichen Bedienung im Falle des Versagens der automatischen Umschaltung, zum Beispiel wenn infolge von Verschmutzung durch Milchreste das Ventilorgan in Form einer Kugel oder eines Druckstößels hängenbleibt. Außerdem bereitet es Schwierigkeiten, bei den bekannten Anordnungen genügend große Kräfte zu erzeugen, die in der Praxis eine sichere Funktion bewirken. Außerdem ist ein Zugriff von außen im Falle von Störungen schwierig und nur bei entsprechender Sachkenntnis möglich, um zum Beispiel Fremdkörper zu entfernen.

Aufgabe der Erfindung ist es, diese Nachteile zu beseitigen und ein einfach aufgebautes, eine hohe Funktionssicherheit besitzendes, praktisch wartungsfreies Abschlußventil zu schaffen, das sowohl automatisch arbeitet als auch manuell bedient werden kann.

Gelöst wird diese Aufgabe nach Erfindung im wesentlichen dadurch, daß ein zwischen einer geöffneten und einer geschlossenen Stellung umsteuerbares, mit einer Membrane zusammenwirkendes Ventilorgan vorgesehen ist, und daß der Umsteuervorgang entweder automatisch in Abhängigkeit von dem im Melkbecherinnenraum herrschenden Druck oder das manuelle Öffnen oder schließen durch eine Bewegung des Melkbechers in axialer Richtung oder auch durch seitliche Bewegung des Melkbechers erfolgt.

Das erfindungsgemäße Abschlußventil bietet vor allem den Vorteil, daß es durch Einhandbedienung ohne einen zusätzlichen Handgriff beim Ansetzen des Melkbechers durch leichten Druck nach unten auch manuell geöffnet werden kann. Dieser manuelle Druck nach unten ist beim Handhabungsablauf beim Ansetzen des Melkbechers ohnehin gegeben. Dadurch kann dieses Abschlußventil auch ohne Leckluft eingesetzt werden. Gemäß einer Ausführungsvariante der Erfindung kann die Betätigung des Abschlußventils auch durch eine seitliche Bewegung des Melkbechers bewirkt werden, wobei in diesem Falle das Ventilorgan mit seiner Wirkrichtung unter einem Winkel zur Melkbecherlängsachse verläuft.

Da die untere Stirnfläche des Melkbechers zur Erzeugung der Schaltvorgänge genutzt wird, stehen relativ große Kräfte zur Verfügung, die eine sichere Arbeitsweise gewährleisten.

Ein leichter Zugang zum erfindungsgemäßen Abschlußventil ist durch Abnahme der das Ventilorgan steuernden Membrane möglich. Ferner ist als besonderer Vorteil zu erwähnen, daß die Konstruktion des erfindungsgemäßen Abschlußventils sicherstellt, daß vor dem Abschluß keine Restmilch verbleibt.

Da die Melkzeuge bei den meisten in der Praxis benutzten Melkanlagen beim Spülvorgang in der Melkzeugaufnahme auf dem Kopf stehen, ergibt sich ein weiterer Vorteil für das Abschlußventil nach der Erfindung, da es auch in dieser Stellung öffnet. Falls erforderlich, kann es durch entsprechende Halterung an der Melkzeugaufnahme in der Öffnungsstellung gehalten werden.

Die Schaltvorgänge können sowohl durch eine flexible Membrane wie auch durch eine Art Kolben bewirkt werden. Vorzugsweise wird jedoch eine Membrane verwendet, die ringförmig um den Milchanschluß ausgebildet ist. Diese Membrane kann so geformt sein, daß sie nach Überwindung einer, praktisch eine Umschnapp-Position darstellenden Mittelstellung in beiden Endstellungen verharrt. Es kann aber auch eine Ausgestaltung gewählt werden, bei der die eine oder andere Endstellung in Form einer Schnappstellung bevorzugt ist.

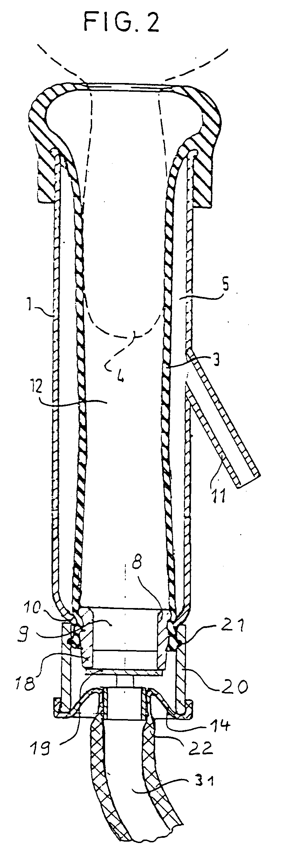

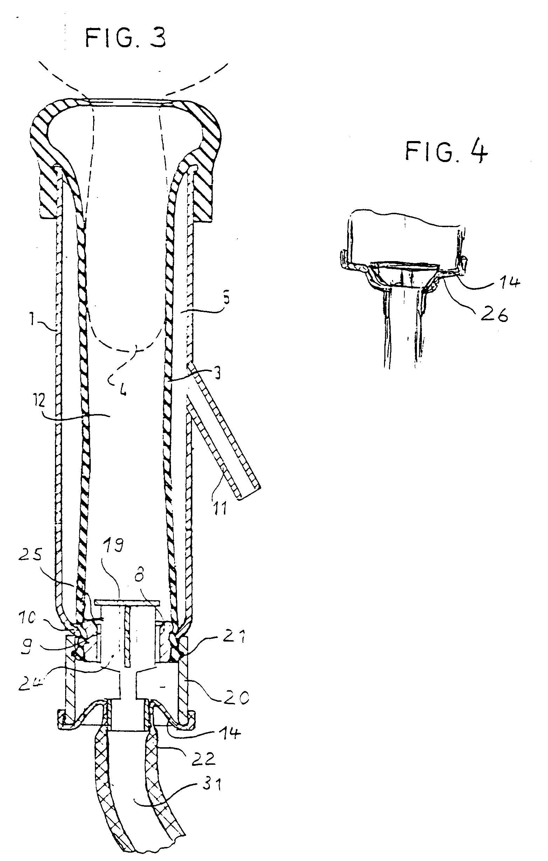

Weiterhin kann entsprechend der in Figur 4 gezeigten Ausgestaltung eine Formgebung der Art erfolgen, daß eine bevorzugte Abknickstellung eingehalten wird. Ebenso kann die Membrane mit dem Milchschlauch ein Formteil bilden, wie dies anhand der Figuren 2, 3 und 5 gezeigt ist.

Die Kräfte zum Öffnen des Abschlusses wie auch die Kräfte, die erforderlich sind, um das Ventil in der Abschlußstellung zu halten, können durch Abstimmen des Durchmessers des bevorzugt als Ventilteller ausgebildeten Abschlußorgans zum Durchmesser der Membrane abgestimmt werden.

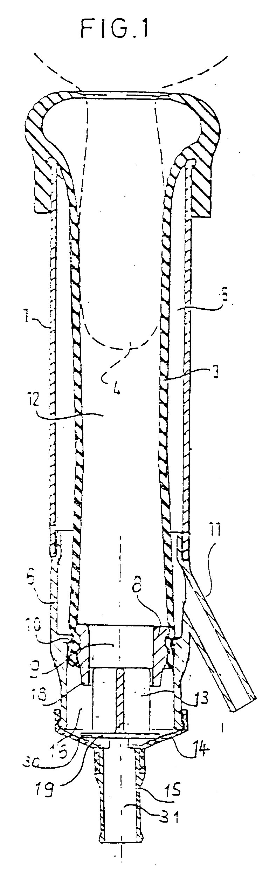

Das Gehäuse des Abschlußventils kann bei einem zweiteiligen Melkbecher mit an das Unterteil angeformt sein, wie dies in Figur 1 gezeigt ist.

Ein weiterer Vorteil der Erfindung besteht darin, daß das Gehäuse des Abschlußventils durchsichtig ist und somit zur Milchflußkontrolle der einzelnen Zitze dient, wobei die bisher übliche Länge des Melkbechers beibehalten werden kann.

Ein weiterer Vorteil des erfindungsgemäßen Abschlußventils besteht darin, daß das Ventilgehäuse auch nachträglich auf vorhandene Melkbecher aufgesteckt werden kann, wobei besonders bevorzugt der Zitzengummi am unteren Bund eine besondere Formgebung, zum Beispiel eine Ringrippe, erhält, um einen sicheren Sitz zu gewährleisten. Dies ist in den Figuren 2 und 3 gezeigt.

Die Ventilplatte kann mit dem durch die Membrane betätigten Hohlnippel oder Stößel unmittelbar und starr verbunden sein, aber dies stellt keine Notwendigkeit dar.

Ebenso kann die Spannmuffe zur Halterung verschiedener Konstruktionen verwendet werden, die für besondere Melkverfahren erforderlich sind.

Weitere besonders vorteilhafte Ausgestaltungen der Erfindung sind in den Unteransprüchen angegeben.

Die Erfindung wird nachfolgend unter Bezugnahme auf die Zeichnung anhand von Ausführungsbeispielen näher erläutert; in der Zeichnung zeigt:
- Figur 1: eine schematische Darstellung eines zweiteiligen Melkbechers mit einem Abschlußventil gemäß einer ersten Ausführungsvariante in geschlossenem Zustand,
- Figu 2: eine schematische Darstellung einer etwas modifizierten Ausgestaltung der Anordnung nach Figur 1 im geöffneten Zustand,
- Figur 3: eine schematische Darstellung einer weiteren Ausführungsvariante der Erfindung im geöffneten Zustand,
- Figur 4: eine schematische Teildarstellung einer weiteren Variante des Abschlußventils, und
- Figur 5: eine schematische Schnittdarstellung einer weiteren Ausführungsform eines zweiteiligen Melkbechers mit einem Abschlußventil nach der Erfindung.

Figur 1 zeigt die Anordnung des Abschlußventils in einem zweiteiligen Melkbecher, der aus einem oberen Metallrohr 1 und einem unteren Kunststoffteil 6 besteht. Der Zitzengummi 3 wird in die rohrförmigen Teile 3, 6 eingeschoben und dichtet oben üblicherweise mit einem Kragen auf dem Metallrohr 1 ab. Die untere Einspannung des Zitzengummis 3 erfolgt durch eine Spannmuffe 8 an der vorstehenden Rippe 10 des Kunststoffteils 6. Der Innenraum 12 des Zitzengummis 3 ist über den Durchgang 9 mit dem Raum 16 des Abschlußventils verbunden. Die hier gezeichneten Führungsstege 13 auf dem Ventilteller 19 dienen insbesondere einer präziseren Führung des Ventiltellers 19, der bei diesem Ausführungsbeispiel mit einem Hohlnippel 15 verbunden ist, an dem das milchschlauchseitige Ende der Membrane 14 angebracht ist.

Die am Kunststoffteil 6 vorgesehene Tülle 11 stellt die Verbindung zu dem zwischen Zitzengummi 3 und Rohrteil 1 gebildeten Ringraum her und ist üblicherweise an einen Pulsator angeschlossen.

Figur 1 zeigt das Abschlußventil im geschlossenen Zustand. Auf den Hohlnippel 15 wird der Milchschlauch angesteckt, der den Melkbecher mit dem Melkvakuum verbindet. In dem Raum 31 bis unterhalb des Ventiltellers 19 herrscht Vakuum. Die auf dem Ventilteller 19 lastende Atmosphäre bewirkt zusammen mit der Membrane 14 den Abschluß. Wird der Melkbecher an die Zitze dicht angesetzt, kann die Öffnung des Abschlußventils automatisch, zum Beispiel durch eine Kerbe 30, am Ventilteller 19 erreicht werden, indem das Vakuum aus dem Raum 31 über die Kerbe 30 in den Raum 16, 9 und 12 übertritt. Bei einer gewissen Vakuumhöhe im Raum 16 erfolgt aufgrund der an der Membrane 14 wirksam werdenden Druckdifferenz das Einklappen der Membrane 14, und das Abschlußventil ist geöffnet, wie in Figur 2 gezeigt.

In gleicher Weise kann diese Öffnung des Ventils manuell durch leichten Druck des Melkbechers nach unten ausgelöst werden. Der Ventilteller 19 wird im Öffnungszustand an die Abstandsstege 18 gedrückt, so daß ein freier Abfluß der Milch mit großem Querschnitt erfolgen kann.

Figur 2 zeigt das Abschlußventil in geöffnetem Zustand. Die Führungstege 13 in Figur 1 sind auf dieser Zeichnung nicht abgebildet. Ferner zeigt Figur 2 die Möglichkeit, das zylindrische Ventilgehäuse 20 auf einen konventionellen Melkbecher von unten aufzustecken, wobei durch die besondere Formgebung des Zitzengummibundes, zum Beispiel durch die Ringrippe 21, ein fester Sitz gewährleistet wird. Vorzugsweise ist das Ventilgehäuse 20 aus durchsichtigem Material.

Als weitere Variante bildet hier die Membrane 14 mit dem Milchschlauch 22 ein Formstück.

Im geöffneten Zustand wird die Membrane 14 durch den von außen wirkenden Atmosphärendruck im Öffnungszustand gehalten. Tritt nun ein starker Vakuumverlust im Innenraum 12 auf und wird das verringerte Vakuum über den Durchgang 9 am Ventilteller 19 wirksam, so wird die Haltekraft der Membrane 14 aufgehoben. Wird beispielsweise durch ein Abfallen des Melkbechers von der Zitze die Mittelstellung der Membrane, die eine Art Umspringstellung darstellt, überwunden, so wird der Ventilteller 19 durch den Druckunterschied wieder in der Abschlußstellung, wie in Figur 1 gezeigt, festgehalten.

Figur 3 zeigt eine weitere Ausführungsvariante im geöffneten Zustand. Die Öffnungs- und Schließvorgänge werden genau wie zuvor beschrieben bewirkt. Bei dieser Variante erfolgt der Abschluß durch den Ventilteller 19 auf einer ringförmigen Abschlußschräge 25 an der Oberseite der Spannmuffe 8. Der Ventilteller wird durch die Führungsstege 24 in der Spannmuffe 8 geführt.

Figur 4 zeigt ein Beispiel, bei dem die Membrane 14 durch eine bestimmte Formgebung in Gestalt einer Knickstelle bei 26 zum Einfalten vorgeformt ist.

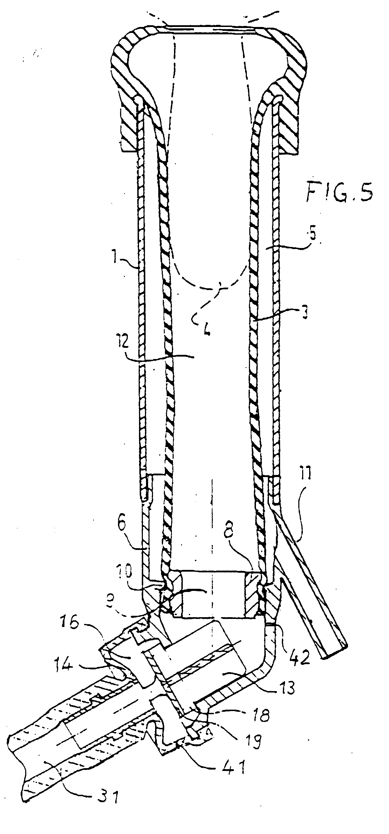

Figur 5 zeigt eine Ausführungsvariante der Erfindung, bei der die Anordnung des Abschlußventils in einem Winkel zur Melkbecherlängsachse erfolgt ist. Auf diese Weise kann die Betätigung des Abschlußventils durch eine seitliche Bewegung des Melkbechers bewirkt werden. Bei den vorangehend beschriebenen Ausführungsbeispielen erfolgt die manuelle Betätigung des Abschlußventils durch eine Melkbecherbewegung in axialer Richtung.

Zur Stabilisierung der Endstellung des Abschlußventils im geöffneten Zustand ist es bei allen Ausführungsvarianten von Vorteil, auf den Außendurchmesser der Membrane 14 zentrisch einen Druck auszuüben. Diese Druckausübung kann dadurch erreicht werden, daß die Membrane 14 einen äußeren zylindrischen Wandungsteil 41 besitzt, dessen Wandungsstärke unterhalb des Ventilgehäuses 20 so ausgebildet ist, daß in der Offenstellung des Abschlußventils durch die Atmosphäre von außen ein Druck auf den Außenumfang der Membrane 14 bewirkt wird. Bei Eintritt von Atmosphäre in den Zitzengummi-Innenraum 12 entfällt der Differenzdruck auf den zylindrischen Wandungsteil, so daß damit auch die Verstärkung der Verriegelung in der Offenstellung aufgehoben wird.

Generell gilt für alle Ausführungsvarianten, daß - falls erforderlich - die Ventilbewegungen gegebenenfalls durch Federn unterstützt werden.

Wird das Abschlußventil bei einem Melkverfahren mit atmosphärischer Belüftung in der milchführenden Leitung verwendet, so ist es sinnvoll, die Belüftungsöffnung, zum Beispiel die Bohrung 42 in Figur 5, im Ventilgehäuse 20 vorzusehen, um so unmittelbar unterhalb der Zitze einen Abfluß der Milch zu fördern.

## Patentansprüche

1. Abschlußventil in einer Saugleitung, insbesondere zur Anbringung im unteren Bereich eines Melkbechers,
dadurch **gekennzeichnet,**
daß ein zwischen einer geöffneten und einer geschlossenen Stellung umsteuerbares, mit einer Membrane zusammenwirkendes Ventilorgan vorgesehen ist, und daß der Umsteuervorgang entweder automatisch in Abhängigkeit von dem im Melkbecherinnenraum herrschenden Druck oder das manuelle Öffnen oder Schließen durch eine Bewegung des Melkbechers in axialer Richtung oder auch durch seitliche Bewegung des Melkbechers erfolgt.

2. Abschlußventil nach Anspruch 1,
dadurch **gekennzeichnet,**
daß die untere Stirnfläche eines Melkbechers als Arbeitsfläche benutzt wird.

3. Abschlußventil nach Anspruch 1,
dadurch **gekennzeichnet,**
daß die untere Stirnfläche eines Melkbechers als Membrane benutzt wird.

4. Abschlußventil nach Anspruch 3,
dadurch **gekennzeichnet,**
daß die Membrane ringförmig um den Milchanschluß ausgebildet ist.

5. Abschlußventil nach Anspruch 3 oder 4,
dadurch **gekennzeichnet,**
daß die Membrane mit dem kurzen Milchschlauch ein Formstück bildet.

6. Abschlußventil nach einem der vorhergehenden Ansprüche,
dadurch **gekennzeichnet,**
daß das Ventilorgan in einem Ventilgehäuse angeordnet ist und dieses Ventilgehäuse auf den unteren Zitzengummibund aufgesteckt ist.

7. Abschlußventil nach Anspruch 6,
dadurch **gekennzeichnet,**
daß der untere Zitzengummibund mit einer Verdickung, insbesondere einer Ringrippe versehen ist, die einen festen Sitz des Ventilgehäuses gewährleistet.

8. Abschlußventil nach Anspruch 6 oder 7,
dadurch **gekennzeichnet,**
daß das Ventilgehäuse durchsichtig ausgebildet ist.

9. Abschlußventil nach einem der vorhergehenden Ansprüche,
dadurch **gekennzeichnet,**
daß die Membrane einen äußeren, zylindrischen Wandungsteil besitzt, der flexibel ausgebildet ist.

10. Abschlußventil nach einem der vorhergehenden Ansprüche,
dadurch **gekennzeichnet,**
daß das Abschlußventil in einem Winkel zur Melkbecherlängsachse angeordnet ist.

11. Abschlußventil nach einem der vorhergehenden Ansprüche,
dadurch **gekennzeichnet,**
daß die Membrane einerseits am Ventilgehäuse durch ihre Eigenspannung fixiert und andererseits mit einem Hohlnippel verbunden ist, der mit dem Ventilorgan verbunden oder gekuppelt ist.

12. Abschlußventil nach einem der vorhergehenden Ansprüche,
dadurch **gekennzeichnet,**
daß an das Ventilorgan melkbecherseitig Führungsstege angeformt sind, die mit Spiel in einer Öffnung gleiten und vorzugsweise im unteren Bereich als Abstandshalter ausgebildet sind.

13. Abschlußventil nach Anspruch 12,
dadurch **gekennzeichnet,**
daß die Führungsstege in eine Spannmuffe eingreifen, wobei der Zitzengummi zwischen dieser Spannmuffe und dem Ventilgehäuse geklemmt ist.

14. Abschlußventil nach einem der vorhergehenden Ansprüche,
dadurch **gekennzeichnet,**
daß das Ventilorgan im unteren Teil eines abgewinkelt ausgebildeten Ventilgehäuses angeordnet ist, dessen oberer Teil gleichachsig zum Melkbecher verläuft und unter Zwischenschaltung des Zitzengummis mit der Spannmuffe verklemmt ist.

## Claims

1. Cut-off valve in a suction line, in particular for mounting in the lower region of a milking cup,
characterised in that a valve member which cooperates with a membrane is provided and can be changed over between an open position and a closed position; and in that the change-over process either takes place automatically in dependence on the pressure prevailing in the inner chamber of the milking cup or the manual opening or closing takes place by a movement of the milking cup in the axial direction or also by sideways movement of the milking cup.

2. Cut-off valve in accordance with claim 1, characterised in that the lower end face of the milking cup is used as a working surface.

3. Cut-off valve in accordance with claim 1, characterised in that the lower end face of a milking cup is used as a membrane.

4. Cut-off valve in accordance with claim 3, characterised in that the membrane is formed in ring-like manner around the milk connection.

5. Cut-off valve in accordance with claim 3 or claim 4, characterised in that the membrane forms a shaped piece with the short milk hose.

6. Cut-off valve in accordance with one of the preceding claims, characterised in that the valve member is arranged in a valve housing and this valve housing is pushed over the lower teat rubber collar.

7. Cut-off valve in accordance with claim 6, characterised in that the lower teat rubber collar is provided with a thickened portion, in particular a ring-shaped rib which ensures a firm seat of the valve housing.

8. Cut-off valve in accordance with claim 6 or claim 7, characterised in that the valve housing is of transparent design.

9. Cut-off valve in accordance with one of the preceding claims, characterised in that the membrane has an outer cylindrical wall part which is of flexible design.

10. Cut-off valve in accordance with one of the preceding claims, characterised in that the cut-off valve is arranged at an angle to the longitudinal axis of the milking cup.

11. Cut-off valve in accordance with one of the preceding claims, characterised in that the membrane is fixed, on the one hand, to the valve housing through its inherent tension and, on the other hand, is connected to a hollow nipple which is connected to the valve member or coupled to the valve member.

12. Cut-off valve in accordance with one of the preceding claims, characterised in that guide webs are moulded onto the valve member at the milking cup side which slide with clearance in an opening and are preferably formed in the lower region as spacers.

13. Cut-off valve in accordance with claim 12, characterised in that the guide webs engage into a clamping muff, with the teat rubber being clamped between this clamping muff and the valve housing.

14. Cut-off valve in accordance with one of the preceding claims, characterised in that the valve member is arranged in the lower part of a valve housing of angled design, the upper part of which extends coaxially to the milking cup and is clamped to the clamping muff with the teat rubber inserted therebetween.

## Revendications

1. Soupape d'obturation dans une conduite d'aspiration, en particulier pour l'agencement dans la région inférieure d'un gobelet trayeur,
caractérisée en ce qu'il est prévu un organe de soupape susceptible d'être piloté entre une position ouverte et une position fermée et coopérant avec une membrane, et en ce que l'opération de pilotage s'effectue soit automatiquement en dépendance de la pression régnant à l'intérieur du gobelet trayeur, soit par ouverture ou fermeture manuelle par un mouvement du gobelet trayeur en direction axiale et également par un mouvement latéral du gobelet trayeur.

2. Soupape d'obturation selon la revendication 1,
caractérisée en ce que la surface frontale inférieure d'un gobelet trayeur est utilisée comme surface de travail.

3. Soupape d'obturation selon la revendication 1,
caractérisée en ce que la surface frontale inférieure d'un gobelet trayeur est utilisée comme membrane.

4. Soupape d'obturation selon la revendication 3,
caractérisée en ce que la membrane est réalisée de façon annulaire autour du raccord à lait.

5. Soupape d'obturation selon l'une ou l'autre des revendications 3 et 4,
caractérisée en ce que la membrane forme conjointement avec le court tuyau à lait une pièce préformée.

6. Soupape d'obturation selon l'une quelconque des revendications précédentes,
caractérisée en ce que l'organe de soupape est agencé dans un boîtier de soupape, et en ce que ce boîtier de soupape est enfiché sur le joint en caoutchouc pour le trayon.

7. Soupape d'obturation selon la revendication 6,
caractérisée en ce que le joint en caoutchouc pour le trayon est pourvu d'un épaississement, en particulier d'une nervure annulaire qui assure un siège ferme pour le boîtier de soupape.

8. Soupape d'obturation selon l'une ou l'autre des revendications 6 et 7,
caractérisée en ce que le boîtier de soupape est réalisé de façon transparente.

9. Soupape d'obturation selon l'une quelconque des revendications précédentes,
caractérisée en ce que la membrane possède une partie de paroi extérieure cylindrique qui est réalisée de façon flexible.

10. Soupape d'obturation selon l'une quelconque des revendications précédentes,
caractérisée en ce que la soupape d'obturation est agencée sous un angle par rapport à l'axe longitudinal du gobelet trayeur.

11. Soupape d'obturation selon l'une quelconque des revendications précédentes,
caractérisée en ce que la membrane est fixée d'une part sur le boîtier de soupape par sa propre précontrainte, et en ce qu'elle est reliée d'autre part à un embout creux qui est relié ou accouplé à l'organe de soupape.

12. Soupape d'obturation selon l'une quelconque des revendications précédentes,
caractérisée en ce que sur l'organe de soupape sont formées du côté gobelet trayeur des barrettes de guidage qui coulissent avec jeu dans une ouverture et qui sont réalisées de préférence dans la région inférieure comme éléments d'écartement.

13. Soupape d'obturation selon la revendication 12,
caractérisée en ce que les barrettes de guidage s'engagent dans un manchon de serrage, le caoutchouc du trayon étant coincé entre ce manchon de serrage et le boîtier de soupape.

14. Soupape d'obturation selon l'une quelconque des revendications précédentes,
caractérisée en ce que l'organe de soupape est agencé dans la partie inférieure d'un boîtier de soupape réalisé de façon coudée, dont la partie supérieure s'étend de façon coaxiale par rapport au gobelet trayeur, et est serrée avec le manchon de serrage avec interposition du joint en caoutchouc pour le trayon.
